(19) Europäisches Patentamt
European Patent Office
Office européen des brevets

(11) **EP 2 662 826 A2**

(12) **EUROPEAN PATENT APPLICATION**
published in accordance with Art. 153(4) EPC

(43) Date of publication:
**13.11.2013 Bulletin 2013/46**

(51) Int Cl.:
**G06T 5/00** $^{(2006.01)}$      **H04N 5/217** $^{(2011.01)}$

(21) Application number: **11854600.1**

(22) Date of filing: **29.12.2011**

(86) International application number:
**PCT/KR2011/010347**

(87) International publication number:
**WO 2012/093812 (12.07.2012 Gazette 2012/28)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.01.2011 KR 20110000653**

(71) Applicant: **Olaworks, Inc.**
**Seoul 135-919 (KR)**

(72) Inventor: **PARK, Min Je**
**Seongnam-si**
**Gyeonggi-do 462-080 (KR)**

(74) Representative: **Goddar, Heinz J.**
**Boehmert & Boehmert**
**Pettenkoferstrasse 20-22**
**80336 München (DE)**

(54) **METHOD FOR DEBLURRING AN INPUT BAR-CODE IMAGE, AND A RECORDING MEDIUM ABLE TO BE READ BY TERMINAL DEVICES AND COMPUTERS**

(57) Provided is a method for deblurring a bar-code image input via a mobile terminal device, the method comprising the steps of: (a) varying the focal length between a mobile terminal device and any desired article to be bought, and calculating a first to an $n^{th}$ optical transfer function (OTF) specific to the mobile terminal device; (b) inputting a bar-code image and then fixing a specific value, in a signal-to-noise ratio within a permissible range, as the value to be applied to a Wiener filter error metric, and next applying $n$ point spread functions (PSF), that have been calculated from the first to $n^{th}$ optical transfer functions, to the Wiener filter error metric by means of the binary search method, and determining whether the result of applying the Wiener filter error metric is below a predetermined threshold; and (c) subjecting the bar-code image to Wiener filtering by selecting a Wiener filter value comprising the signal-to-noise ratio and the point spread function when the result of applying the Wiener filter error metric is below the threshold.

[Figure 2]

200

EP 2 662 826 A2

## Description

### Technical Field

The present invention is related to a method, a terminal and a computer-readable recording medium for deblurring an inputted barcode image, and more specifically to the method, the terminal and the computer-readable recording medium for deblurring the barcode image efficiently in a shorter time by calculating the point spread functions of a mobile terminal while varying focal lengths with a subject, extracting an optimal point spread function and a noise-to-signal ratio by a linear search algorithm or a binary search algorithm, and applying the Wiener filtering with the extracted point spread function and the noise-to-signal ratio value to the inputted barcode image.

### Background Technology

A barcode widely used in the industries was recently proposed to increase product management efficiency, and it has made great achievement in the retail sector of the market. Based thereon, it is used for a variety of applications even in the fields of other industries. In the past, as devices for reading the barcode, it was common to use the barcode-exclusive recognition devices such as a laser scanner, but thanks to the recent spread of the use of mobile terminals, a method for recognizing the barcode by using cameras equipped on mobile terminals has been introduced.

However, the cameras on such mobile terminals have a lower resolution than the laser scanner in general and they tend to have a serious level of noise. Accordingly, the serious blurring of the barcode image taken has resulted in such a problem where the rate of barcode recognition has deteriorated. In order to solve the blurring problem, several technologies have been presented, among which the representative technology is to estimate the accurate point spread function (PSF) and noise value of a camera and perform deblurring of a barcode image based on the estimation. However, the technology is applicable only to the case in which the point spread function distribution is consistent with a mathematically well-defined Gaussian distribution or a disk distribution but it also generally requires a strong level of an image signal sample that may not be adopted on such mobile terminals. Hence, in reality, it could not be used to improve the blurring of the barcode image taken by the general mobile terminals.

Therefore, the applicant of the present invention came to develop a technology to support deblurring of an inputted barcode image more efficiently even in a general mobile terminal environment that has a complicated optical transfer function (OTF) that cannot be approximated to the Gaussian distribution or the disk distribution.

### Detailed Description of the Invention

#### Technical Tasks

It is an objective of the present invention to solve all of the problems described above.

It is another objective of the present invention to deblur an inputted barcode image in almost real time by shortening the time of the Wiener filtering even in a general mobile terminal environment that has complicated optical transfer functions.

#### Means of Task Solution

The representative configuration of the present invention intended to achieve the above objectives is listed below:

In accordance with one aspect of the present invention, provided is a method for deblurring a barcode image inputted via a mobile terminal comprising (a) a step in which a $1^{st}$ to an $n^{th}$ optical transfer function (OTF) specific to a mobile terminal is calculated by varying the focal length between the mobile terminal and a subject, (b) a step in which, once a barcode image is entered, a specific value from the signal-to-noise ratio within an available scope is fixed as a value to be applied to a Wiener filtering error metric and then n point spread functions (PSFs) that have been calculated from the $1^{st}$ to $n^{th}$ optical transfer functions are applied to the Wiener filtering error metric by means of the binary search method before it is determined whether the result of applying the Wiener filtering error metric is equal to or less than a preset threshold, and (c) a step in which the point spread function and signal-to-noise ratio for which the result of applying the Wiener filtering error metric is equal to or less than the threshold are selected as the Wiener filter value to perform Wiener filtering on the barcode image.

In accordance with another aspect of the present invention, provided is a method for deblurring a barcode image inputted via a mobile terminal comprising (a) a step in which a $1^{st}$ to an $n^{th}$ optical transfer function (OTF) specific to a mobile terminal is calculated by varying the focal length between the mobile terminal and a subject, (b) a step in which, once a barcode image is inputted via the mobile terminal, n point spread functions (PSFs) calculated from the

$1^{st}$ to $n^{th}$ optical transfer functions and $1^{st}$ to $m^{th}$ noise-to-signal ratios (NSR) within an available scope are linearly applied and Wiener filtering is performed with respect to the inputted barcode image, and (c) a step in which a point spread function and a noise-to signal ratio for which improvement on blurring of the barcode image that has been subject to Wiener filtering is optimal are selected as values of Wiener filtering.

In accordance with still another aspect of the present invention, provided is a terminal for deblurring an inputted barcode image comprising a PSF managing part that calculates n point spread functions (PSFs) from the $1^{st}$ to $n^{th}$ optical transfer functions, once unique $1^{st}$ to $n^{th}$ optical transfer functions (OTFs) of a mobile terminal are calculated by varying focal lengths between a subject and the mobile terminal, an error metric applying part that, once a barcode image is inputted via the mobile terminal, fixes a specific value from the signal-to-noise ratio within an available scope as a value to be applied to a Wiener filtering error metric, and then applies the n point spread functions to the Wiener filtering error metric by means of the binary search method, and determines whether the result of applying the Wiener filtering error metric is equal to or less than a preset threshold value, and a filtering performing part that selects the point spread function and signal-to-noise ratio for which the result of applying the Wiener filtering error metric is equal to or less than the threshold as the Wiener filter value to perform Wiener filtering with respect to the inputted barcode image.

In accordance with still another aspect of the present invention, provided is a terminal for deblurring an inputted barcode image comprising a PSF managing part that calculates n point spread functions (PSFs) from the $1^{st}$ to $n^{th}$ optical transfer functions, once unique $1^{st}$ to $n^{th}$ optical transfer functions (OTFs) of a mobile terminal are calculated by varying focal lengths between a subject and the mobile terminal, and a filtering performing part that, once a barcode image is inputted via the mobile terminal, linearly applies the n point spread functions and $1^{st}$ to $m^{th}$ noise-to-signal ratios (NSR) within an available scope, performs Wiener filtering with respect to the inputted barcode image, and selects a point spread function (PSF) and a noise-to-signal ratio for which improvement on blurring of the barcode image that has been subject to Wiener filtering is optimal are selected as values of Wiener filtering.

In addition, other methods, systems, and computer-readable recording media for recording a computer program to execute the methods that are intended to implement the present invention are further provided.

## Effects of the Invention

According to the present invention, an optimal Wiener filter value may be searched in a general mobile terminal environment in a short period of time so that an inputted barcode image may be subject to deblurring in real time.

## Brief Description of the Drawings

Figure 1 is a diagram which illustratively shows a result of deblurring an inputted barcode image by performing the Wiener filtering.

Figure 2 is a diagram showing the whole configuration of a terminal (200) for deblurring the inputted barcode image in accordance with an embodiment example of the present invention.

<Description of Reference Numerals>

200: terminal

210: PSF managing part

220: error metric applying part

230: filtering performing part

240: communication part

250: control part

## Embodiment of the Invention

In the following detailed description of the present invention, references are made to the accompanying drawings that show specific embodiment examples as illustrations in which the present invention may be practiced. These examples are described in sufficient detail to enable those skilled in the art to practice the invention. It is to be understood that the various embodiment examples of the invention, although different, are not necessarily mutually exclusive. For example, a particular feature, structure, or characteristic described herein in connection with one embodiment example may be implemented within other embodiment examples without departing from the spirit and scope of the invention. In addition, it is to be understood that the location or arrangement of individual elements within each disclosed embodiment example may be modified without departing from the spirit and scope of the invention. Therefore, the following detailed description is not to be taken in a limiting sense, and the scope of the present invention is defined only by the attached claims, appropriately interpreted, along with a full range of equivalents to which the claims are entitled. In the drawings, similar numerals refer to the same or similar functionality throughout several views.

In the following, the present invention is described in detail by referring to the preferred embodiment examples of the present invention so that those having common knowledge in the technical field to which the present invention belongs may easily practice the present invention.

Preferred Embodiment Examples of the Invention]

<u>Wiener Filtering</u>

The present invention is related to a method for deblurring an inputted barcode image efficiently by applying Wiener filtering to the barcode image inputted through a mobile terminal and acquiring optimal point spread function and noise-to-signal ratio (noise-to-signal ration [*sic:* noise-to-signal ratio] NSR). In the following, a general principle of the Wiener filtering is examined first.

A Wiener filter is a kind of filter for noise reduction, and more specifically, the optimal filter designed as a standard for minimizing the mean square error of the difference between some predicted desired output and the normal filter output in a situation in which signal and noise are mixed.

From the aspect of signal processing, a signal of a photographed barcode image may be expressed as in the following Mathematical Formula 1:

[Mathematical Formula 1]

$$y(t) = h(t) * x(t) + n(t)$$

In the mathematical formula 1, where h(t) indicates a point spread function (PSF); x(t) is a signal of an original barcode image, and n(t) is the additional noise arising from a lens, a CCD, etc. of a photographing device. Since the additional noise prevents the signal of the original barcode image from being restored simply by applying an inverse process of the point spread function, a separate filter g(t) should be applied to an output signal of the photographed barcode image y(t). Accordingly, it may be expressed as in the mathematical formula 2:

[Mathematical Formula 2]

$$\hat{x}(t) = g(t) * y(t)$$

Herein, the Wiener filtering optimally restores the signal of the original barcode image by using a method of least squares. It may be expressed as shown in the Mathematical Formula 3 below.

[Mathematical Formula 3]

$$argmin_g |\hat{x}(t) - x(t)|^2$$

If the Mathematical Formula 3 is transformed into the frequency domain, it may be expressed as shown in the Mathematical Formula 4 below.

[Mathematical Formula 4]

$$argmin_G |\hat{X}(f) - X(f)|^2$$

Herein, if the Mathematical Formula 4 is differentiated for G, the following Mathematical Formula 5 is derived:

[Mathematical Formula 5]

$$G(f) = \frac{H^*(f)}{|H(f)|^2 + |\frac{N(f)}{Y(f)}|^2}$$

$$= \frac{H^*(f)}{|H(f)|^2 + NSR(f)}$$

In other words, the Mathematical Formula 5 is a formula for drawing the optimal Wiener filter G(f) and more specifically, it can be found from the formula 5 that only the information on H(f) and NSR(f) without information on X(f) is used for configuring an optimal filter. Therefore, in order to configure the optimal filter, it is essential to search the most appropriate pair of H(f) and NSR(f).

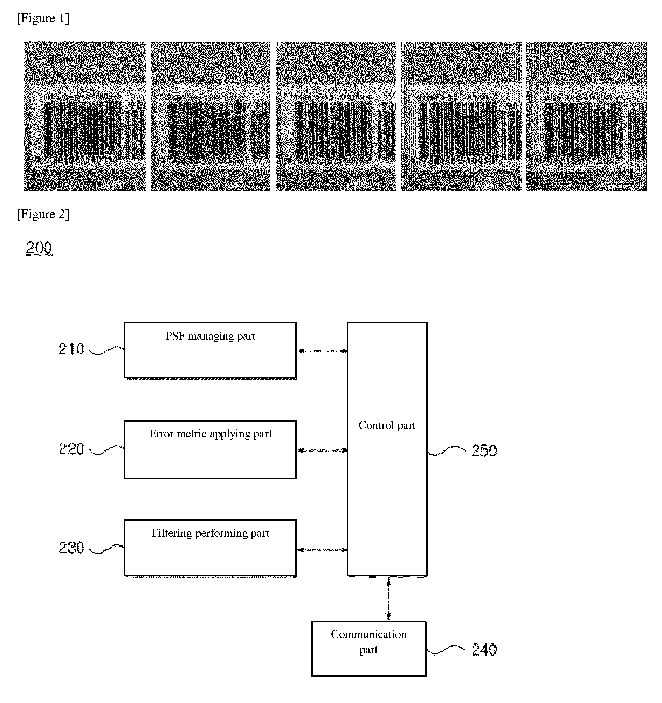

Figure 1 is a drawing which illustratively shows a result of deblurring an inputted barcode image by performing the Wiener filtering.

When examining Figure 1 specifically, the first image and second image on the left respectively correspond to an original barcode image and a photographed barcode image, and it may be noted that blurring of the photographed barcode image is serious. Herein, if the most appropriate H(f) and NSR(f) are applied to perform Wiener filtering, the photographed barcode image may be deblurred at almost the same level as the original barcode image (see the third image). However, if an inappropriate H(f) or (see the fourth image) or NSR(f) (see the fifth image) is applied to perform Wiener filtering, it may be verified that the level of blurring improvement is lacking.

In the following, the method for acquiring the most appropriate H(f) and NSR(f) required to perform Wiener filtering by using any terminal is described.

<u>Configuration of Terminal</u>

Figure 2 is a drawing showing the whole configuration of a terminal (200) for deblurring the inputted barcode image in accordance with an embodiment example of the present invention.

As illustrated in Figure 2, the terminal (200) in accordance with an embodiment example of the present invention may comprise a PSF managing part (210), an error metric applying part (220), a filtering performing part (230), a communication part (240) and a control part (250).

First, in accordance with one embodiment example of the present invention, if unique 1st to nth optical transfer functions (OTF) of a mobile terminal are calculated based on the focal length of a subject, the PSF managing part (210) may, in accordance with an embodiment example of the present invention, perform a function of calculating n point spread functions (PSF) by performing an inverse process with respect to the calculated 1st to nth optical transfer functions. Since lens and a CCD comprising a photographing device each has its unique optical transfer function, and an optical transfer function of the whole photographing device can be acquired not simply by piling up the lens' optical transfer function and CCD's optical transfer function but only through a sophisticated mathematical analysis, it had to take a long period to identify the optical transfer function of the photographing device at the time when a barcode image was inputted based on the prior art. Therefore, the PSF managing part (210) in accordance with one embodiment example of the present invention does not use a method for identifying the optical transfer function of a photographing device through a sophisticated mathematical analysis but uses a method for shortening the time required for an optimal filter by measuring and recording optical transfer functions when a subject was photographed on n different focal lengths and by getting n point spread functions from them and setting a group of candidates in advance to be applied to H(f) in the Mathematical Formula 5. By reference, in this specification, the example of fixing a distance to a subject and changing the focal lengths but it is not limited to the above and various modified examples in which a distance to a subject may be changed would be included in the scope of the present invention.

Next, in accordance with an embodiment example of the present invention, if the barcode image is inputted through the mobile terminal, the error metric applying part (220) may fix a specific value among the signal-to-noise values within an available scope as a value to apply to an error metric of the Wiener filtering, then apply some of n point spread functions already calculated by the PSF managing part (210) to the error metric of the Wiener filtering by using a binary search algorithm which has the maximum operation count of 2 log(n)+1, and then determine whether the result of these applications is not exceeding the preset threshold or not. Herein, the error metric of the Wiener filtering for searching the optimal point spread function by the binary search algorithm is shown in Mathematical Formula 6 below.

[Mathematical Formula 6]

$$error(H(f)) \quad = \quad |\hat{X}(f) - X(f)|^2$$
$$= \quad \left| G(f)Y(f) - \frac{(Y(f) - N(f))}{H(f)} \right|^2$$

(Herein, G(f) is the same as that of the Mathematical Formula 5.)

The error metric of the Wiener filtering is a formula to get the error scale of the Wiener filtering. For this, a book "Numerical Recipes in C++" co-authored by William H. Press and three others and published in 2001 by "Cambridge University Press" may be referred to. (The whole content of the article must be considered to have been incorporated in the specification.)

Specifically, if the value of N(f) (i.e., NSR(f)) in the Mathematical Formula 6 is fixed as a specific value among noise-to-signal ratios within the available scope, the error metric of the Wiener filtering may be seen to be increased in proportion to the differences between G(f) and 1/H(f). In other words, by reference to the Mathematical Formulas 5 and 6, it can be found that if a point spread function which is more different from the optimal point spread function that is applied, the error value increases. Preferably, the error metric applying part (220) in accordance with an embodiment example of the present invention may extract a noise-to-signal ratio of the inputted barcode image immediately and fix the extracted noise-to-signal ratio as the value of N(f) to be applied to the error metric of the Wiener filtering.

As described above, if the error metric of the Wiener filtering increases in proportion to the difference between G (f) and 1/H (f) as the value of the noise-to-signal ratio to be applied thereto is fixed, the error metric applying part (220) in accordance with an embodiment example of the present invention may repeatedly go through a process in which a point spread function corresponding to a point where a distance d (initial value of d may be set as n/2 or a numerical value similar to it) is increased based on n/2 (or point similar to n/2), a point spread function corresponding to a point where d is decreased based on n/2, and a point spread function of a point corresponding to n/2 are applied to the Wiener filtering error metric to get a minimum error value among them, and if the minimum error value is larger than the preset threshold, after setting d as d/2 (or a numerical value similar to d/2), a point where d (or d is n/4 now) is increased based on the point spread function of a point corresponding to the minimum error value, a point where d is decreased based on the point spread function of the point corresponding to the minimum error value, and a point spread function of the point corresponding to the minimum error value are applied to the Wiener filtering error metric to compare the newly determined minimum value with the threshold (so-called iteration process) to search point spread functions until the result application of the Wiener filtering error metric becomes the threshold or less.

The following describes the pseudo code for searching a point spread function by the error metric applying part (220).

$$m \leftarrow n/2;$$
$$d \leftarrow n/2;$$
**while** $1 < d$ **do**
 **if** $e_m$ *is not computed yet* **then**
  $e_m = \text{error}(H_m);$
 **end**
 $e_l \leftarrow \text{error}(H_{m-d});$
 $e_u \leftarrow \text{error}(H_{m+d});$
 $e_{min} \leftarrow min(e_l, e_m, e_u);$
 **if** $e_{min} < threshold$ **then**
  $\hat{x} \leftarrow \text{Wiener}(y, H_{i_{min}}, NSR);$
  $barcode \leftarrow \text{decode}(\hat{x});$
  **if** *barcode satisfies checksum* **then**
   **return**
  **end**
 **end**
 $d \leftarrow d/2;$
**end**

When examining the above pseudo code, contrary to the conventional binary search algorithm for sorted data, the method of the error metric applying part (220) for searching the point spread function is found to use information on the gradient of the error metric function of the Wiener filtering and information on a point corresponding to a minimum error value in order to find a starting point from which each iteration will be performed. As mentioned above, it is because the error metric of the Wiener filtering increases in proportion to the difference between G(f) and 1/H(f) (the gradient of the Wiener filtering error metric is changing based on an optimal point spread function).

Next, in accordance with an embodiment example of the present invention, after such point spread function and signal-to-noise ratio are extracted for which the result of applying the Wiener filtering error metric by the error metric applying part (220) satisfy the threshold value, the filtering performing part (230) may play a function to perform Wiener filtering (that is, applying the G(f) filter of the Mathematical Formula 5) with respect to the inputted barcode image upon selecting the extracted point spread function and signal-to-noise ratio as values of the Wiener filter to perform deblurring of the barcode image.

Next, in accordance with an embodiment example of the present invention, the communication part (240) may perform a function of allowing the terminal (200) to communicate with an external device.

Furthermore, the control part (250) in accordance with an embodiment example of the present invention may perform a function of controlling the flow of the data among the PSF managing part (210), the error metric applying part (220), the filtering performing part (230) and the communication part (240). In other words, the control part (250) in accordance with the present invention controls the PSF managing part (210), the error metric applying part (220), the filtering performing part (230) and the communication part (240) to perform their unique functions by controlling the flow of data from/to outside or the flow of data among the components of the terminal (200).

On the other hand, the method was described above in accordance with one embodiment example of the present invention, wherein a specific value among noise-to-signal ratios within the available scope is fixed as the value to be applied to the Wiener filtering error metric, and then the point spread function and noise-to-signal ratio for which the result of applying n point spread functions to the Wiener filtering error metric by the method of binary search method satisfy the threshold value; the present invention is not limited to this. In accordance with another embodiment example of the present invention, it will be possible to search the optimal Wiener filter by performing the Wiener filtering with n point spread functions and 1st to mth noise-to-signal ratios within an available scope according to the linear search algorithm, instead of using the error metric of the Wiener filtering. In particular, another embodiment example of the present invention may be preferable to be applied to either a case where the value of N(f) to be used regularly to the error metric of the Wiener filtering could not be specified because NSR could not be extracted immediately due to weak signal of the inputted barcode image or a case where the number of operation is not expected to be large due to the small size of n.

Specifically, the filtering performing part (230) in accordance with another embodiment example of the present invention may perform a function of carrying out the Wiener filtering for the inputted barcode image by linearly applying n point spread functions calculated by the PSF managing part (210) and m NSRs, i.e., 1st to mth noise-to-signal ratios within the available scope and selecting a specific value of point spread function (PSF) and a specific value of noise-to-signal ratio for which blurring of the barcode image is optimally improved as values of the Wiener filter. This may be expressed as the pseudo code shown below.

```
for i ← 1 to n do
    for j ← 1 to m do
        x̂ ← Wiener(y, Hᵢ, NSRⱼ);
        barcode ← decode(x̂);
        if barcode satisfies checksum then
            return
        end
    end
end
```

In other words, assuming that so point spread functions of 30 have been calculated by the PSF managing part (210), and the scope of available noise-to-signal ratios range from 0.0001 to 0.01 so m is 100 by dividing the scope by a unit of 0.0001, the filtering performing part (230) in accordance with another embodiment example of the present invention may perform Wiener filtering for a total of 3,000 times (30 x 100) to extract the point spread function (PSF) and the noise-to-signal ratio for which blurring of the barcode image is optimally improved.

Even in accordance with another embodiment example of the present invention, the PSF managing part (210) may measure and record optical transfer functions when a random subject was photographed on n different focal lengths instead of using a method for acquiring the optical transfer functions of the photographing device through the complicated mathematical analysis and then set up a group of candidates to be applied to H(f) of the Mathematical Formula 5 in advance by getting n PSFs to shorten the time required for searching the optimal filter.

The embodiment examples described above according to the present invention can be implemented in the form of a program command that may be executed through a variety of computer components and recorded on a computer-readable recording media. The computer-readable media may include solely or in combination the program commands, data files and data structures. The program commands recorded on the computer-readable recording medium may be especially designed and configured for the present invention or may be known to and usable by a person skilled in the field of computer software. Examples of the computer-readable recording medium include magnetic media such as hard disk, floppy disk, and magnetic tape, optical media such as CD-ROM and DVD, magneto-optical media such as floptical disk and hardware devices such as ROM, RAM and flash memory especially configured to store and execute program commands. The program commands include not only a machine language code made by a compiler but also a high level code that can be used by an interpreter etc., which is executed by a computer. The hardware device may be configured to work as one or more software modules to perform the action according to the present invention, and its reverse is also the same.

While the present invention has been described so far by certain details such as specific components and limited embodiment examples and drawings, they were merely provided to promote an overall understanding of the present invention, and the present invention is not limited by the embodiment examples above. A person with common knowledge of the field to which the present invention belongs may attempt various modifications and changes based on such description.

Therefore, the ideas of the present invention must not be confined to the embodiment examples explained, and the Scope of Claims to be described later as well as everything including variations equal or equivalent to the Scope of Claims would belong to the category of the ideals of the present invention.

**Claims**

1. A method for deblurring a barcode image inputted via a mobile terminal comprising:

   (a) a step in which a 1st to an nth optical transfer function (OTF) specific to a mobile terminal is calculated by varying the focal length between the mobile terminal and a subject,

   (b) a step in which, once a barcode image is entered, a specific value from the signal-to-noise ratio within an available scope is fixed as a value to be applied to a Wiener filtering error metric and then n point spread functions (PSFs) that have been calculated from the 1st to nth optical transfer functions are applied to the Wiener filtering error metric by means of the binary search method before it is determined whether the result of applying the Wiener filtering error metric is equal to or less than a preset threshold, and

(c) a step in which the point spread function and signal-to-noise ratio for which the result of applying the Wiener filtering error metric is equal to or less than the threshold are selected as the Wiener filter values to perform Wiener filtering on the barcode image.

2. The method recited in Claim 1, wherein in the step (b), a noise-to-signal ratio is extracted from the inputted barcode image, and then the noise-to-signal ratio extracted is fixed as a value to be applied to the Wiener filtering error metric.

3. The method recited in Claim 2, wherein the step (b) includes (b1) a step in which, while the value of the noise-to-signal ratio to be applied to has been fixed, a point spread function corresponding to a point where a distance d - initial value of the d is n/2 - is increased based on n/2, a point spread function corresponding to a point where d is decreased based on n/2, and a point spread function of a point corresponding to n/2 are applied to the Wiener filtering error metric to detect the minimum error value among them, and (b2) an iteration step in which, if the minimum error value detected exceeds the threshold, after setting the d as d/2, the process for applying the point spread functions of a point where the d is increased based on the point spread function of the point corresponding to the minimum error value detected, a point where the d is decreased based on the point spread function of the point corresponding to the minimum error value detected, and a point corresponding to the minimum error value to the Wiener filtering error metric and then comparing the newly detected minimum among them with the threshold is performed.

4. The method recited in Claim 3, wherein in the step (b2), the iteration is performed until the newly detected minimum value is equal to or less than the threshold.

5. A method for deblurring a barcode image inputted via a mobile terminal comprising:

(a) a step in which a 1st to an nth optical transfer function (OTF) specific to a mobile terminal is calculated by varying the focal length between the mobile terminal and a subject,

(b) a step in which, once a barcode image is inputted via the mobile terminal, n point spread functions (PSFs) calculated from the 1st to nth optical transfer functions and 1st to mth noise-to-signal ratios (NSR) within an available scope are linearly applied and Wiener filtering is performed with respect to the inputted barcode image, and

(c) a step in which a point spread function and a noise-to-signal ratio for which improvement on blurring of the barcode image that has been subject to Wiener filtering is optimal are selected as values of Wiener filtering.

6. A terminal for deblurring an inputted barcode image comprising:

a PSF managing part that once unique 1st to nth optical transfer functions (OTFs) of a mobile terminal are calculated by varying focal lengths between a subject and the mobile terminal, calculates n point spread functions (PSFs) from the 1st to nth optical transfer functions,

an error metric applying part that, once a barcode image is inputted via the mobile terminal, fixes a specific value from the signal-to-noise ratio within an available scope as a value to be applied to a Wiener filtering error metric, and

then applies the n point spread functions to the Wiener filtering error metric by means of the binary search method, and determines whether the result of applying the Wiener filtering error metric is equal to or less than a preset threshold value, and

a filtering performing part that selects the point spread function and signal-to-noise ratio for which the result of applying the Wiener filtering error metric is equal to or less than the threshold as the Wiener filter value to perform Wiener filtering with respect to the inputted barcode image.

7. The terminal recited in Claim 6, wherein the error metric applying part extracts a signal-to-noise ratio from the inputted barcode image and then fixes the extracted signal-to-noise ratio as a value to be applied to the Wiener filtering error metric.

8. The terminal recited in Claim 7, wherein the error metric applying part, while the value of the noise-to-signal ratio to be applied has been fixed, applies a point spread function corresponding to a point where a distance d - initial value of the d is n/2 - is increased based on n/2, a point spread function corresponding to a point where d is decreased based on n/2, and a point spread function of a point corresponding to n/2 to the Wiener filtering error metric to detect the minimum error value among them, and if the minimum error value detected exceeds the threshold, after setting the d as d/2, performs iteration of the process for applying the point spread functions of a point where the d is increased based on the point spread function of the point corresponding to the minimum error value detected, a point where the d is decreased based on the point spread function of the point corresponding to the minimum error value detected, and a point corresponding to the minimum error value to the Wiener filtering error metric and then comparing the newly detected minimum among them with the threshold.

9. The terminal recited in Claim 8, wherein the error metric applying part performs the iteration until the newly detected minimum value is equal to or less than the threshold.

10. A terminal for deblurring an inputted barcode image comprising a PSF managing part that once unique 1st to nth optical transfer functions (OTFs) of a mobile terminal are calculated by varying focal lengths between a subject and the mobile terminal, calculates n point spread functions (PSFs) from the 1st to nth optical transfer functions, and a filtering performing part that, once a barcode image is inputted via the mobile terminal, linearly applies the n point spread functions and 1st to mth noise-to-signal ratios (NSR) within an available scope, performs Wiener filtering with respect to the inputted barcode image, and selects a point spread function (PSF) and a noise-to-signal ratio for which improvement on blurring of the barcode image that has been subject to Wiener filtering is optimal are selected as values of the Wiener filtering.

11. A computer-readable recording medium on which a computer program is recorded to execute the method according to any one of the claims from Claim 1 to Claim 5.

[Figure 1]

[Figure 2]

200